# FASCICULE DE BREVET EUROPEEN

(11) **EP 1 607 030 B1**
(45) Date de publication et mention de la délivrance du brevet: **24.09.2008**
(21) Numéro de dépôt: 05291277.1
(22) Date de dépôt: 14.06.2005
(51) Int. Cl.: A47J 37/06

(54) **Appareil électroménager avec au moins un accessoire amovible**
Haushaltsgerät mit mindestens einem lösbaren Zubehör
Household apparatus with at least one detachable accessory

(30) Priorité: 14.06.2004 FR 0406415
(43) Date de publication de la demande: 21.12.2005
(73) Titulaire: SEB SA, 69130 Ecully (FR)
(72) Inventeur: Lequy, David, 73000 Chambéry-Le-Vieux (FR); Moine, Olivier, 73100 Aix-Les-Bains (FR)
(74) Mandataire: Pichat, Thierry

(56) Documents cités:
- EP-A- 1 302 142
- DE-U1- 29 622 986
- PATENT ABSTRACTS OF JAPAN vol. 1997, no. 12, 25 décembre 1997 (1997-12-25) & JP 09 201289 A (SANYO ELECTRIC CO LTD), 5 août 1997 (1997-08-05)
- PATENT ABSTRACTS OF JAPAN vol. 018, no. 582 (C-1270), 8 novembre 1994 (1994-11-08) & JP 06 217887 A (MITSUBISHI ELECTRIC HOME APPLIANCE CO LTD; others: 01), 9 août 1994 (1994-08-09)
- PATENT ABSTRACTS OF JAPAN vol. 2003, no. 12, 5 décembre 2003 (2003-12-05) & JP 2003 339546 A (ZOJIRUSHI CORP), 2 décembre 2003 (2003-12-02)

## Description

La présente invention concerne un appareil électroménager comportant un ensemble chauffant et au moins un accessoire séparable de l'ensemble chauffant, tel que, par exemple un crêpier muni d'une louche et/ou d'un répartiteur de pâte et/ou d'une spatule, un appareil à raclette muni de spatules, une plaque de cuisson munie de fourchettes, ou une pierrade munie d'une pierre de cuisson comme connu par le document DE 296 22 986.

Les appareils électroménagers avec accessoire(s) présentent un inconvénient majeur inhérent à leur structure : l'accessoire séparable de l'ensemble chauffant est très souvent rangé dans un endroit différent de ce dernier afin pour des raisons pratiques, notamment de gain de place (l'encombrant emballage ayant été jeté), d'où la possibilité d'oublier l'accessoire quand on veut transporter l'appareil (par exemple pour un prêt), voire de le perdre.

La présente invention vise à réaliser un appareil conformé de façon permettre le rangement de l'accessoire avec l'ensemble chauffant sans que cela ne nécessite un encombrement important.

Selon l'invention, l'appareil électroménager comprenant un ensemble chauffant et au moins un accessoire amovible de l'ensemble chauffant présente la caractéristique selon laquelle l'ensemble chauffant comporte au moins un logement adapté à servir de logement de rangement à l'accessoire quand l'ensemble chauffant est rangé, le logement étant porté par une face inférieure de l'ensemble chauffant qui fait face au support sur lequel repose l'ensemble chauffant en cours d'utilisation.

Ainsi, la présence du logement permet de ranger l'accessoire avec l'ensemble chauffant sans que cela génère une augmentation de l'encombrement de l'appareil.

D'autres particularités et avantages de la présente invention apparaîtront dans la description détaillée de deux modes de réalisation donnés à titre d'exemples non limitatifs et illustrés dans les dessins annexés.

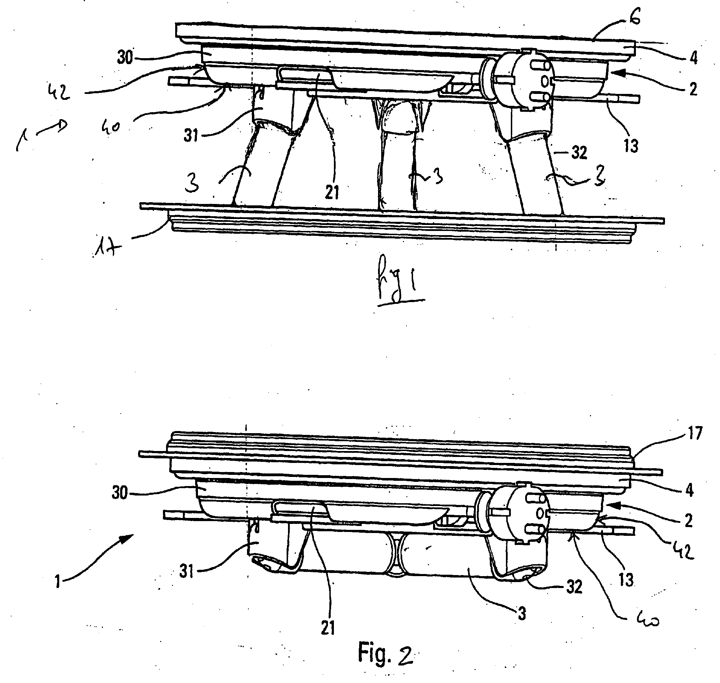

La figure 1 est une vue de haut et de côté d'un appareil électroménager conformément à un premier mode de réalisation, les pieds étant en position d'utilisation ;
La figure 2 est une vue similaire à la figure 1, les pieds étant en position de rangement ; et

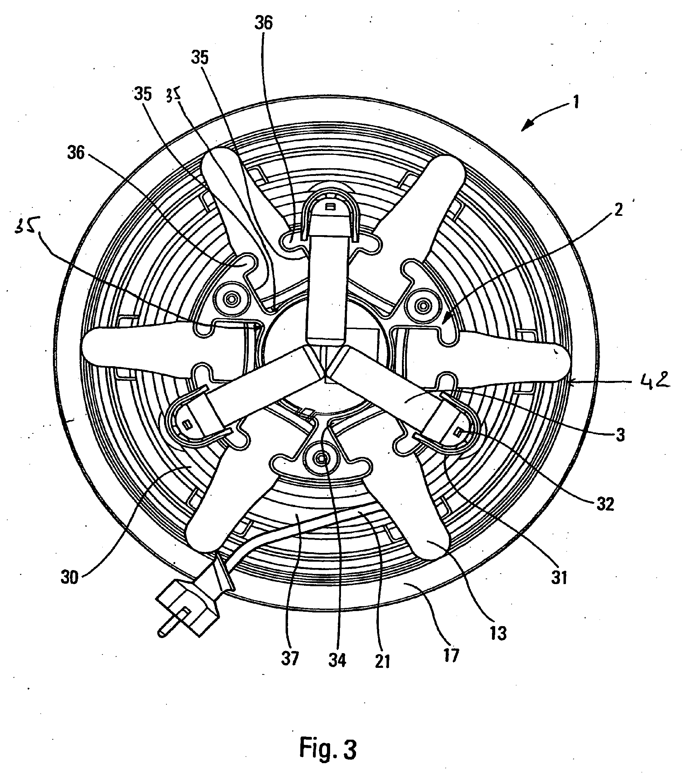

La figure 3 est une vue de dessous de l'appareil électroménager, les pieds étant en position de rangement.

L'appareil électroménager 1, en l'occurrence un appareil à raclette 1, comprend un ensemble chauffant 2 et des pieds 3 (en l'occurrence trois) reliés à l'ensemble chauffant 2.

L'ensemble chauffant 2 comporte une plaque de cuisson 4 et une résistance électrique. La plaque de cuisson 4 possède une surface supérieure 6 adaptée à recevoir directement un aliment à cuire (en l'occurrence, du fromage) et une surface inférieure sous laquelle est disposée la résistance électrique. Dans le présent exemple, la surface supérieure 6 de la plaque de cuisson 4 est revêtue d'un anti-adhésif, par exemple du PTFE. De plus, afin de faciliter son lavage (par exemple au lave-vaisselle), elle est séparable des autres éléments constituant l'ensemble chauffant 2. L'ensemble chauffant 2 comprend également une plaque formant réflecteur qui s'étend sous la plaque de cuisson 2 et la résistance électrique et permet de limiter le transfert thermique vers le bas, c'est à dire vers le support sur lequel les pieds 3 prennent appui. De plus, l'ensemble chauffant 2 comprend également une base 30 en matière plastique qui s'étend sous le réflecteur, ce dernier étant enfermé par la plaque de cuisson 6 et par la base 30.

Les pieds 3 sont montés mobiles par rapport à l'ensemble chauffant 2 entre une position d'utilisation dans laquelle ils sont adaptés à maintenir l'ensemble chauffant 2 à une distance suffisante du support sur lequel il repose, et une position de rangement dans laquelle ils sont disposés contre et sous l'ensemble chauffant 2, le long de celui-ci. Dans le présent exemple, chaque pied 3 est monté pivotant par rapport à la base 30 qui comprend à cet effet des moyens d'articulation 31. Ces moyens d'articulation 31 sont conformés de façon à immobiliser les pieds 3 dans leurs positions de rangement et d'utilisation par le franchissement d'un point dur, chaque pied 3 comprenant deux cavités 32 adaptées à coopérer avec une patte 33 élastiquement déformable solidaire de la base 30 de sorte que, quand il est dans une de ses deux positions, la patte 33 est disposée dans la cavité 32 correspondante.

De plus, l'appareil électroménager 1 comprend également un élément d'assise 17 amovible qui est adapté à servir de support sur lequel reposent les pieds 3 en position d'utilisation. Cet élément d'assise 17 est un simple plateau du type plat à tarte.

Par ailleurs, l'appareil électroménager 1 comprend, outre l'ensemble chauffant 2, au moins un accessoire 13 qui est amovible de l'ensemble chauffant. En l'occurrence, l'appareil électroménager 1 comprend six spatules 13 qui sont adaptées à faire passer le fromage fondu de la plaque de cuisson 4 à une assiette maintenue sous la base 30.

L'ensemble chauffant 2 comporte au moins un logement 34 adapté à servir de logement de rangement à l'accessoire 13 quand l'ensemble chauffant est rangé. En l'occurrence, l'ensemble chauffant comporte six logements 34, un par spatule 13.

Chaque logement 34 est porté par une face inférieure de l'ensemble chauffant 2 qui est adaptée à faire face au support sur lequel repose l'ensemble chauffant 2 quand il est en cours d'utilisation. Dans le présent exemple, ces logements 34 sont réalisés à la face inférieure 40 de la base 30.

Chaque logement 34 comprend une paroi de fond 41 qui est orientée sensiblement dans la même direction que la face inférieure 40, et des bords périphériques 35 sensiblement perpendiculaires à la paroi de fond 41. En l'occurrence, la face inférieure 40 de la base 30 ayant la forme d'un disque, les logements 34 sont répartis angulairement de façon régulière, et les bords périphériques 35 comprennent deux bords radiaux 35 entre lesquels peut être rangée la spatule 13. Chaque logement 34 comprend également un orifice permettant le passage de l'accessoire 13 et débouchant sur une des tranches de l'ensemble chauffant 2, en l'occurrence, débouchant sur la surface périphérique 42 de la base 30 qui est perpendiculaire à la face inférieure 40. L'orifice de passage est délimité latéralement par les deux bords radiaux 35, et verticalement par la paroi de fond 41 et par un organe de recouvrement 36 qui recouvre au moins partiellement le logement 34. Dans le présent exemple, l'organe de recouvrement 36 est formé par deux ergots 36 qui se font face et qui ne recouvrent que très légèrement le logement (34), chaque ergot 36 étant porté par un bord radial 35.

Chaque logement 43 comprend des moyens de maintien qui sont adaptés à coopérer avec l'accessoire de façon à définir la position de celui-ci quand il est rangé. Le maintien de chaque spatule 13 dans son logement 34 est assuré par les dimensions réciproques de la spatule 13 et du logement 34 qui assurent un frottement immobilisateur. Plus précisément, les moyens de maintien sont formés, d'une part, par les bords périphériques, et, d'autre part, par la structure de l'orifice de passage dont les dimensions correspondent sensiblement à celles de la spatule de manière à permettre son maintien par coincement.

En outre, la face inférieure 40 de la base 30 comprend une rainure 37 pour le rangement d'un câble d'alimentation électrique 21. Cette rainure 37 annulaire est réalisée à la périphérie de la surface inférieure de la base 30. Les moyens d'articulation 31 s'étendent partiellement au-dessus de la rainure 37 de façon à permettre l'insertion du câble 21 dans la rainure 37 et son maintien partiel dans cette dernière. De plus, la rainure 37 débouche dans les logements 34 de sorte que les spatules 13, quand elles sont rangées dans leurs logements 34, maintiennent le câble 21. Dans le présent mode de réalisation, la rainure 37 et chaque logement 34 sont disposés l'un par rapport à l'autre de sorte que la spatule 13 recouvre, selon son secteur angulaire correspondant, la totalité de la rainure 37 de façon à empêcher le câble 21 d'en sortir.

De nombreuses modifications peuvent être apportées au mode de réalisation décrit.

Ainsi, il est possible d'avoir un appareil électroménager dont l'ensemble chauffant est un crêpier (par exemple dont la face inférieure est de forme rectangulaire), les accessoires étant formés par des spatules. Dans un tel appareil, les logements des spatules réalisés à la face inférieure de l'ensemble chauffant peuvent être disposés selon deux rangées, chaque rangée comportant des logements disposés côte à côte, de sorte que les orifices de passage de ces logements débouchent dans les deux tanches qui sont définies par la hauteur de l'ensemble chauffant et par les deux grands côtés de la face inférieure rectangulaire. Il est aussi possible que la surface inférieure porte une rainure de rangement pour le câble d'alimentation, cette rainure ayant la forme d'un serpentin avec un double aller et retour débouchant à la surface de fond des différents logements pour spatules qui sont ainsi utilisées pour emprisonner le câble.

L'appareil crêpier ainsi décrit peut également comprendre, toujours à la surface inférieure de l'ensemble chauffant, des logements spécifiques pour la louche utilisée pour verser la pâte à crêpe sur la plaque de cuisson et pour le répartiteur en forme de T utilisé pour répartir uniformément la pâte liquide sur la plaque. Les moyens de maintien, notamment pour la louche et le répartiteur qui sont des accessoires avec un manche relativement long, peuvent être formés par des petites pattes élastiques qui sont adaptées à pincer l'accessoire en différents endroits pour le fixer à l'ensemble chauffant.

Il est aussi possible que l'appareil électroménager soit une pierrade, l'accessoire étant la pierre de cuisson dont le logement peut être défini par des larges glissières le long desquelles peut coulisser la pierre, ces glissières étant portées par la paroi de fond de l'ensemble chauffant et pouvant faire office de pieds.

Il est aussi possible que l'appareil électroménager comprenne deux étages (voire plus) de logements pour accessoires, la paroi de fond du logement de l'étage externe (étage le plus proche du support quand l'ensemble chauffant est en cours d'utilisation) étant formée par l'organe de maintien des logements de l'étage interne. Ce peut être le cas pour des appareils électroménagers multifonction, par exemple un crêpier - pierrade, le logement de la pierre étant disposé à l'étage externe, ceux des accessoires du crêpier à l'étage interne (avec de plus, éventuellement, une rainure pour câble d'alimentation débouchant dans les logements de l'étage interne, la paroi de fond du logement de l'étage externe étant ajourée de façon à permettre la sortie du câble.

## Revendications

1. Appareil électroménager (1) comprenant un ensemble chauffant (2) et au moins un accessoire (13) qui est amovible de l'ensemble chauffant (2), l'ensemble chauffant (2) comportant au moins un logement (34) adapté à servir de logement de rangement à l'accessoire (13) quand l'ensemble chauffant (2) est rangé, **caractérisé en ce que** le logement (34) est porté par une face inférieure (40) de l'ensemble chauffant (2) qui fait face au support sur lequel repose l'ensemble chauffant (2) en cours d'utilisation.

2. Appareil électroménager (1) selon la revendication 1, **caractérisé en ce que** chaque logement (34) comprend une paroi de fond (41) orientée sensiblement dans la même direction que la face inférieure (40), et des bords périphériques (35) sensiblement perpendiculaires à la paroi de fond (41).

3. Appareil électroménager (1) selon la revendication 1 ou 2, **caractérisé en ce que** chaque logement (34) comprend un orifice permettant le passage de l'accessoire (13) est débouchant sur une (42) des tranches de l'ensemble chauffant (2).

4. Appareil électroménager (1) selon la revendication 3 dépendante de la revendication 2, **caractérisé en ce que** l'orifice de passage est délimité verticalement par la paroi de fond (41) et par un organe de recouvrement (36) qui recouvre au moins partiellement le logement (34).

5. Appareil électroménager (1) selon la revendication 4, **caractérisé en ce que** l'organe de recouvrement (36) est formé par deux ergots (36) se faisant face.

6. Appareil électroménager (1) selon la revendication 4 ou 5, **caractérisé en ce qu'**il comprend un deuxième logement de rangement dont la paroi de fond est formée par un organe de maintien du premier logement.

7. Appareil électroménager (1) selon l'une des revendications 1 à 6, **caractérisé en ce que** chaque logement (34) comprend des moyens de maintien (36) qui sont adaptés à coopérer avec l'accessoire (13) de façon à définir la position de celui-ci quand il est rangé.

8. Appareil électroménager (1) selon la revendication 7 dépendante de la revendication 2 ou de l'une des revendications qui en dépend, **caractérisé en ce que** les moyens de maintien (36) sont formés par les bords périphériques (35) dont l'écartement correspond sensiblement à une dimension de l'accessoire (13) de manière à permettre son maintien par coincement.

9. Appareil électroménager (1) selon la revendication 7 ou 8 dépendantes de l'une des revendications 3 à 5, **caractérisé en ce que** les moyens de maintien (36) sont formés par la structure de l'orifice de passage dont une dimension de sa section de passage correspond à une dimension de l'accessoire (13) de manière à permettre son maintien par coincement.

10. Appareil électroménager (1) selon l'une des revendications 1 à 9, **caractérisé en ce qu'**il comprend à sa face inférieure (40) une rainure (37) permettant le rangement d'un câble d'alimentation électrique (21) et débouchant dans le logement (34) de sorte que l'accessoire (13), quand il rangé, permet de maintenir le câble (21) dans la rainure (37).

11. Appareil électroménager (1) selon la revendication 10, **caractérisé en ce que** la rainure (37) et le logement (34) sont disposés l'un par rapport à l'autre de sorte que l'accessoire (13), quand il est rangé, recouvre la rainure (37) de façon à empêcher le câble (21) d'en sortir.

12. Appareil électroménager (1) selon l'une des revendications 1 à 11, **caractérisé en ce que** l'ensemble chauffant (2) est un appareil à raclette (2) comportant une plaque de cuisson (4) adaptée à recevoir directement le fromage à fondre, les accessoires (13) étant formés par des spatules (13).

13. Appareil électroménager selon l'une des revendications 1 à 11, **caractérisé en ce que** l'ensemble chauffant est un crêpier, les accessoires étant formés par des spatules et/ou une louche et/ou un répartiteur de pâte.

14. Appareil électroménager selon l'une des revendications 1 à 11, **caractérisé en ce que** l'ensemble chauffant est une pierrade, les accessoires étant formés par la pierre de cuisson.

15. Appareil électroménager selon l'une des revendications 1 à 14, **caractérisé en ce que** l'ensemble chauffant est multifonction, les accessoires étant formés par les différentes pièces amovibles associées aux différents modes de cuisson.

## Claims

1. An electric household appliance (1) comprising a heating assembly (2) and at least one accessory (13) which can be removed from the heating assembly (2), said heating assembly (2) being provided with at least one housing (34) suitable for storing the accessory (13) when the heating assembly (2) is tidied away, **characterized in that** said housing (34) is carried by a lower surface (40) of the heating assembly (2) which faces the support on which the heating assembly (2) rests when it is in use.

2. An electric household appliance (1) according to Claim 1, **characterized in that** each housing (34) comprises a bottom wall (41) oriented substantially in the same direction as the lower surface (40), and peripheral edges (35) oriented substantially perpendicular to the bottom wall (41).

3. An electric household appliance (1) according to Claim 1 or 2, **characterized in that** each housing (34) has an opening which allows insertion of the accessory (13) and emerges at one (42) of the edges of the heating assembly (2).

4. An electric household appliance (1) according to Claim 3 dependent on claim 2 , **characterized in that** said opening is delimited in vertical direction by the bottom wall (41) and by a covering element (36) which at least partly covers the housing (34).

5. An electric household appliance (1) according to Claim 4, **characterized in that** the covering element (36) is formed by two lugs (36) located opposite one another.

6. An electric household appliance (1) according to Claim 4 or 5, **characterized in that** it has a second housing for storage purposes, the bottom wall of said second housing being formed by a retaining element of the first housing.

7. An electric household appliance (1) according to one of Claims 1 to 6, **characterized in that** each housing (34) has retaining means (36) which are suitable for cooperating with the accessory (13) so as to define the position of the latter when it is in its stored position.

8. An electric household appliance (1) according to Claim 7 dependent on Claim 2 or on one of the claims depending on it, **characterized in that** the retaining means (36) are formed by the peripheral edges (35), the distance between said edges corresponding substantially to a dimension of the accessory (13) so as to allow the latter to be wedged in place.

9. An electric household appliance (1) according to Claim 7 or 8 dependent on one of Claims 3 to 5, **characterized in that** the retaining means (36) are formed by the structure of the opening for insertion of the accessory, a dimension of its cross-section corresponding to a dimension of the accessory (13) so as to allow the latter to be wedged in place.

10. An electric household appliance (1) according to one of Claims 1 to 9, **characterized in that** it has, in it lower surface (40), a slot (37) facilitating storage of an electric cable (21) and opening into the housing (34) in such a way that the accessory (13), when it is in its stored position, enables the cable (21) to be retained in the slot (37).

11. An electric household appliance (1) according to Claim 10, **characterized in that** the slot (37) and the housing (34) are disposed relative to one another in such a way that the accessory (13), when it is in its stored position, covers the slot (37) so as to prevent the cable (21) from coming out of it.

12. An electric household appliance (1) according to one of Claims 1 to 11, **characterized in that** the heating assembly (2) is a raclette appliance (2) having a hotplate (4) suitable for directly receiving the cheese to be melted, the accessories (13) consisting of spatulas (13).

13. An electric household appliance according to one of Claims 1 to 11, **characterized in that** the heating assembly is a pancake maker, the accessories consisting of spatulas and/or a ladle and/or a batter spreader.

14. An electric household appliance according to one of Claims 1 to 11, **characterized in that** the heating assembly is a hot-stone cooking appliance, the accessories consisting of the hot stone.

15. An electric household appliance according to one of Claims 1 to 14, **characterized in that** the heating assembly is multifunctional, the accessories consisting of various removable parts associated with the different cooking methods.

## Patentansprüche

1. Elektrogerät (1) umfassend eine Heizeinheit (2) und mindestens ein Zubehör (13), das von der Heizeinheit (2) lösbar ist, wobei die Heizeinheit (2) mindestens eine Anordnung (34) aufweist, die dazu geeignet ist, eine Anordnung zum Aufbewahren des Zubehörs (13) bereit zu stellen, wenn die Heizeinheit (2) aufgestellt ist, **dadurch gekennzeichnet, dass** die Anordnung (34) von einer unteren Fläche (40) der Heizeinheit (2) getragen wird, die dem Träger gegenüber liegt, auf dem die Heizeinheit (2) während der Benutzung liegt.

2. Elektrogerät (1) nach Anspruch 1, **dadurch gekennzeichnet, dass** jede Anordnung (34) eine im Wesentlichen in die gleiche Richtung wie die untere Fläche (40) gerichtete Rückwand (41) aufweist, und im Wesentlichen senkrecht zur Rückwand (41) ausgerichtete Umfangsränder (35).

3. Elektrogerät (1) nach Anspruch 1 oder 2, **dadurch gekennzeichnet, dass** jede Anordnung (34) eine Öffnung aufweist, die die Passage des Zubehörs (13) ermöglicht und die in eine der Scheiben (42) der Heizeinheit (2) mündet.

4. Elektrogerät (1) nach Anspruch 3 abhängig von Anspruch 2, **dadurch gekennzeichnet, dass** die Öffnung der Passage in vertikaler Richtung von der Rückwand (41) und von einem Organ zum Abdecken (36) begrenzt wird, die zumindest teilweise die Anordnung (34) abdeckt.

5. Elektrogerät (1) nach Anspruch 4, **dadurch gekennzeichnet, dass** das Organ zum Abdecken (36) aus zwei sich gegenüber liegenden Haltervorsprung (36) gebildet wird.

6. Elektrogerät (1) nach Anspruch 4 oder 5, **dadurch gekennzeichnet, dass** es eine zweite Anordnung zum Aufbewahren, deren Rückwand durch eine Halteeinrichtung der ersten Anordnung gebildet wird, aufweist.

7. Elektrogerät (1) nach einem der Ansprüche 1 bis 6, **dadurch gekennzeichnet, dass** jede Anordnung (34) Haltemittel (36) aufweist, die dazu geeignet sind, so mit dem Zubehör (13) zusammen zu wirken, dass sie dessen Lage bestimmen, wenn es aufgestellt ist.

8. Elektrogerät (1) nach Anspruch 7 abhängig von Anspruch 2 oder einem der davon abhängigen Ansprüche, **dadurch gekennzeichnet, dass** die Haltemittel (36) durch die Umfangsränder (35) gebildet werden, deren Abstand im Wesentlichen einer Abmessung des Zubehörs (13) in der Weise entspricht, dass dessen Halten mittels einer Einklemmstelle gewährleistet ist.

9. Elektrogerät (1) nach Anspruch 7 oder 8 abhängig von einem der Ansprüche 3 bis 5, **dadurch gekennzeichnet, dass** die Haltemittel (36) durch die Struktur der Passagenöffnung gebildet sind, deren Dimension ihrer Passagensektion einer Dimension des Zubehörs (13) in der Weise entspricht, dass dessen Halten mittels einer Einklemmstelle ermöglicht wird.

10. Elektrogerät (1) nach einem der Ansprüche 1 bis 9, **dadurch gekennzeichnet, dass** es an seiner unteren Fläche (40) eine Rille (37) aufweist, die die Anordnung eines elektrischen Versorgungskabels (21) ermöglicht und so in die Anordnung (34) mündet, dass das Zubehör (13), wenn es aufgestellt ist, gewährleistet, dass das Kabel (21) in der Rille (37) verbleibt.

11. Elektrogerät (1) nach Anspruch 10, **dadurch gekennzeichnet, dass** die Rille (37) und die Anordnung (34) in Bezug auf einander in der Weise angeordnet sind, dass das Zubehör (13), wenn das Elektrogerät aufgestellt ist, die Rille (37) so bedeckt, dass das Kabel (21) daran gehindert wird, sich davon zu lösen.

12. Elektrogerät (1) nach einem der Ansprüche 1 bis 11, **dadurch gekennzeichnet, dass** die Heizeinheit (2) ein Raclettegerät (2) ist umfassend eine Kochplatte (4), die dazu geeignet ist, Käse direkt zum Schmelzen aufzunehmen, wobei die Zubehöre (13) als Spatel (13) geformt sind.

13. Elektrogerät (1) nach einem der Ansprüche 1 bis 11, **dadurch gekennzeichnet, dass** das Heizgerät ein Crêpe-Gerät ist, wobei die Zubehöre als Spatel und/oder als eine Kelle und/oder als ein Teigverteiler ausgebildet sind.

14. Elektrogerät (1) nach einem der Ansprüche 1 bis 11, **dadurch gekennzeichnet, dass** die Heizplatte eine heißer Stein (pierrade) ist, wobei die Zubehöre als Kochstein gebildet sind.

15. Elektrogerät (1) nach einem der Ansprüche 1 bis 14, **dadurch gekennzeichnet, dass** das Heizgerät ein Multifunktionsgerät ist, wobei die Zubehöre von verschieden bewegbare Teile ausgebildet sind, die mit den verschiedenen Kocharten verbunden werden.
